Europäisches Patentamt

European Patent Office

Office européen des brevets

(11) Numéro de publication : **0 165 167**
**B1**

(12) **FASCICULE DE BREVET EUROPÉEN**

(19)

(45) Date de publication du fascicule du brevet :
29.07.87

(21) Numéro de dépôt : **85401085.7**

(22) Date de dépôt : **03.06.85**

(51) Int. Cl.⁴ : **B 64 D 33/04**

(54) Ensemble dilueur-déviateur de jet pour turbomoteur d'aérodyne.

(30) Priorité : **04.06.84 FR 8408709**

(43) Date de publication de la demande :
**18.12.85 Bulletin 85/51**

(45) Mention de la délivrance du brevet :
**29.07.87 Bulletin 87/31**

(84) Etats contractants désignés :
**DE GB IT NL**

(56) Documents cités :
**DE-A- 3 129 305**
**FR-A- 1 144 879**
**FR-A- 2 293 363**
**FR-A- 2 508 412**
**FR-A- 2 515 735**
**US-A- 4 007 587**
**US-A- 4 018 046**
**US-A- 4 215 537**
**US-A- 4 369 937**

(73) Titulaire : **AEROSPATIALE Société Nationale Indus-**
**trielle**
**37 boulevard de Montmorency**
**F-75781 Paris Cédex 16 (FR)**

(72) Inventeur : **Toulmay, François Valentin**
**12, Allée de la Cadière**
**F-13127 Vitrolles (FR)**

(74) Mandataire : **Lepeudry-Gautherat, Thérèse et al**
**ARMENGAUD JEUNE CABINET LEPEUDRY 6, rue du**
**Fg. St-Honoré**
**F-75008 Paris (FR)**

## Description

La présente invention concerne un ensemble dilueur-déviateur de jet pour turbomoteur d'aérodyne, et elle se rapporte plus précisément à un tel ensemble pour un turbomoteur d'hélicoptère à échappement latéral et placé devant la boîte de transmission principale de l'hélicoptère, dans un capotage qui constitue une partie intégrante du fuselage.

On sait que les missiles à têtes chercheuses équipées de détecteurs de rayonnements infrarouges constituent une menace pour les aérodynes militaires, en particulier les avions et hélicoptères équipés de turbomoteurs, car les parties métalliques chaudes que ces aérodynes présentent à l'arrière de leur(s) turbomoteur(s) et qui sont soit des parties arrière de ces turbomoteurs, telles que leur tuyère de sortie, soit des parties métalliques balayées et échauffées par les jets de gaz chauds d'échappement des turbomoteurs, ainsi que les jets de gaz chauds d'échappement eux-mêmes constituent des sources importantes d'émission de rayonnements infrarouges.

Pour cette raison, il a déjà été proposé de supprimer, ou tout au moins de réduire ou atténuer dans toute la mesure du possible, et simultanément sans trop nuire au fonctionnement ni aux performances des turbomoteurs, l'émission infrarouge de ces parties métalliques chaudes et de ces jets de gaz chauds, d'une part, en masquant les parties chaudes à la « vue » du missile, quelle que soit la position relative du missile par rapport à l'aérodyne, et, d'autre part, en assurant une dilution des jets de gaz chauds dans l'air ambiant frais afin d'en abaisser suffisamment la température.

Le brevet des Etats-Unis d'Amérique n° 3 981 143 décrit un dispositif de suppression de l'émission infrarouge liée à une tuyère d'échappement de gaz chauds, et qui comprend un noyau monté coaxial dans la tuyère, de manière à délimiter avec celle-ci une trajectoire tortueuse de sortie des gaz chauds, cette trajectoire empêchant de voir l'entrée de la tuyère depuis la sortie de cette dernière, afin d'éviter tout rayonnement infrarouge direct vers l'arrière, ainsi que des moyens de refroidissement de parties au moins de la tuyère et du noyau, qui comprennent en combinaison une soufflante montée coaxiale sur l'extrémité arrière de l'arbre du turbomoteur et entraînée en rotation par le flux de gaz chaud sortant de ce turbomoteur, cette soufflante ayant des aubes circonférentiellement réparties et tournant autour de l'axe du turbomoteur, une chambre d'entrée de la soufflante assurant une réduction de la turbulence et une répartition égale du flux d'entrée dans la soufflante, des passages sensiblement radiaux d'alimentation de la chambre d'entrée en air ambiant frais, un canal de sortie de la soufflante, un cône de sortie de la soufflante monté coaxial dans le canal de sortie, afin de former un canal annulaire de diffusion du flux de sortie de la soufflante, et une bague de subdivision et de diffusion du flux de sortie de la soufflante, cette bague étant positionnée dans le canal de diffusion afin de diviser le flux soufflé et d'en diriger une partie vers la paroi du noyau pour refroidir ce dernier, tandis que l'autre partie est dirigée vers la tuyère pour refroidir cette dernière.

Une telle réalisation, qui n'est bien adaptée que pour une implantation sur un turbomoteur à échappement axial ou tout au moins longitudinal, présente l'inconvénient de comprendre un organe, la soufflante, qui est constamment entraîné en mouvement, en fonctionnement, et qui est donc d'une réalisation et d'un montage délicats et complexes, et chargé dynamiquement, ce qui a pour conséquence que cet organe est bien davantage susceptible de défaillances qu'un organe immobile.

Le brevet des Etats-Unis d'Amérique n° 4 018 046 décrit également un dispositif de suppression du rayonnement infrarouge d'un turbomoteur, notamment pour hélicoptère. Ce dispositif comprend un ensemble éjecteur à aubes fixes mais réglables, et un déviateur de jet en forme de conduit convergent-divergent coudé. L'ensemble éjecteur comprend plusieurs aubes radiales en forme de V à ailes latérales ondulées, qui sont réparties circonférentiellement en bout d'une tuyère de turbomoteur, et qui assurent une introduction d'air ambiant de refroidissement et de dilution dans le jet de gaz chauds sortant de la tuyère. L'air frais est admis sous la forme d'une part, d'une couche périphérique entourant les gaz chauds, d'autre part d'un flux central injecté dans le jet de gaz chauds, et enfin de lames d'air en secteurs angulaires répartis sur la circonférence et en alternance avec des lames de gaz chauds également en secteurs angulaires. Les gaz chauds ainsi dilués et refroidis avec de l'air ambiant sont injectés dans le déviateur de jet, qui est constitué, de l'amont vers l'aval, d'un tronçon de mélange d'entrée, convergent et dont la section évolue progressivement d'une entrée circulaire à une sortie sensiblement rectangulaire, d'un tronçon intermédiaire d'accélération, coudé et légèrement convergent, et d'un tronçon de diffusion de sortie, qui est divergent, les tronçons intermédiaire et de sortie ayant une section sensiblement rectangulaire, dont la plus grande dimension s'étend dans la direction transversale. L'injection dans le déviateur de jet du mélange de gaz chauds et d'air ambiant qui sort de l'ensemble éjecteur entraîne l'aspiration, par le passage annulaire délimité entre la sortie circulaire de l'ensemble éjecteur et l'entrée circulaire du déviateur de jet, d'un volume supplémentaire d'air ambiant qui augmente encore la dilution du mélange gazeux et en diminue la température. La paroi arrière relevée du déviateur de jet coudé empêche toute vue directe de l'arrière, et depuis la sortie du déviateur, sur les parties chaudes en sortie de tuyère du turbomoteur ou à l'entrée de l'ensemble éjecteur. De plus, le déviateur de jet est entouré d'une couverture tubulaire d'isolation thermique, et des aubes internes de déviation, profilées et courbées autour d'un axe transversal parallèle à l'axe de courbure du tronçon coudé du déviateur, sont montées dans ce tronçon coudé, afin de faciliter l'obtention d'un écoulement non turbulent. Enfin, des moyens de refroidissement sont intégrés aux parois du déviateur de jet, et comprennent des fentes ménagées dans ces parois et formant des éjecteurs alimentés par des canaux délimités par des panneaux sur la face externe des parois, de sorte que les parties correspondantes de la face externe des parois soient balayées et refroidies par des écoulements d'air ambiant, dans le même sens que l'écoulement central dans le déviateur, ou en sens contraire, les fentes en éjecteurs assurant l'injection dans le déviateur d'écoulements d'air ambiant en couches sensiblement parallèles au flux central.

Cette réalisation, contrairement à la précédente, ne comporte pas d'organes animés d'un mouvement continu en fonctionnement, mais elle présente cependant l'inconvénient d'être d'une réalisation complexe, lourde et coûteuse au niveau notamment de l'ensemble éjecteur.

Un autre dispositif pour supprimer les radiations infrarouges des gaz d'échappement et des parties métalliques chauffées d'un turbomoteur est décrit dans la demande de brevet français n° 2 508 412. Ce dispositif comprend de l'amont vers l'aval une tuyère d'injection primaire des gaz chauds et un ensemble de dilution, de déviation de jet et d'injection secondaire, qui est également un ensemble refroidi par circulation d'air ambiant. La tuyère d'injection primaire des gaz chauds comporte un tronçon amont, constituant une tuyère collectrice des gaz chauds d'échappement du turbomoteur et dont la section évolue progressivement d'une entrée circulaire à une sortie sensiblement rectangulaire, et un tronçon aval, prolongeant le tronçon amont, et constituant plusieurs tuyères-injecteurs, de section sensiblement rectangulaire, dont chacune débouche, par son extrémité aval, à l'entrée d'une conduite coudée de l'ensemble de dilution, de déviation de jet et d'injection secondaire, en délimitant avec cette entrée un passage annulaire périphérique par lequel un flux primaire d'air ambiant est aspiré par l'injection de gaz chauds la conduite coudée correspondante. Dans chacune des différentes conduites coudées, qui sont toutes disposées à l'intérieur d'une enveloppe externe également coudée, il se produit ainsi une dilution des gaz chauds avec de l'air ambiant du flux primaire, puis une déviation du jet de mélange gazeux, tandis que simultanément la paroi de chacune des conduites coudées est refroidie par circulation d'un flux secondaire d'air ambiant dans des canaux délimités à l'intérieur de l'enveloppe externe et à l'extérieur des conduites coudées et entre ces dernières, ce flux secondaire d'air ambiant étant également aspiré par effet de trompe, en raison de la circulation de jets de mélange gazeux dans les conduites coudées.

Selon une réalisation particulière, la partie coudée et la partie aval de chaque conduite coudée sont séparées des parties correspondantes de la ou des conduites coudées voisines par une plaque déflectrice qui s'étend, à l'intérieur de l'enveloppe externe, au-delà des extrémités aval des conduites coudées, de sorte que le flux secondaire d'air ambiant, qui pénètre dans l'enveloppe externe au niveau et autour des extrémités amont des conduites coudées, et qui circule dans le même sens que les jets de mélanges gazeux dans les conduites coudées, est partagé par les plaques déflectrices en courants dont chacun vient diluer le jet de mélange gazeux sortant de l'une des conduites coudées, selon une injection secondaire. Selon d'autres réalisations particulières, le flux secondaire d'air ambiant pénètre dans l'enveloppe externe sensiblement au niveau et autour des extrémités aval des conduites coudées, et circule à contre-sens par rapport aux jets de mélange gazeux guidés dans les conduites coudées, jusqu'aux extrémités amont de ces dernières, au niveau desquelles des organes de déviation dirigent les courants du flux secondaire vers l'entrée des conduites coudées et dans le même sens d'écoulement que les gaz chauds sortant des tuyères-injecteurs et que le flux primaire pénétrant dans les conduites coudées. Dans les réalisations de ce genre, les flux primaire et secondaire d'air ambiant sont tous deux mélangés par l'entrée des conduites coudées aux gaz chauds sortant des tuyères-injecteurs.

Les réalisations décrites dans le brevet français n° 2 508 412 conviennent effectivement à l'équipement de turbomoteurs d'hélicoptères à échappement latéral et placés devant la boîte de transmission principale des hélicoptères, dans un capotage faisant partie intégrante du fuselage, mais ces réalisations ont pour inconvénient commun que la structure de l'ensemble de dilution, de déviation de jet et d'injection secondaire, extérieurement refroidi par circulation d'air ambiant frais dans des doubles parois, est complexe, lourde et coûteuse, et, de ce fait, n'est appropriée qu'à l'équipement d'hélicoptères de gros tonnage.

Le but de l'invention est de proposer un ensemble dilueur-déviateur de jet pour turbomoteur d'hélicoptère à échappement latéral, qui soit d'une structure simple, efficace, relativement peu lourde, économique à fabriquer, et pratique dans la mesure où il ne constitue pas une gêne pour les différentes opérations de maintenance à effectuer sous le capotage du fuselage sur lequel l'ensemble dilueur-déviateur de jet est monté.

Un autre but de l'invention est de proposer un ensemble dilueur-déviateur de jet qui puisse être monté sur des hélicoptères n'ayant pas dès l'origine été équipés de cet ensemble.

Un autre but de l'invention également est de proposer un ensemble dilueur-déviateur de jet qui puisse être mis en oeuvre de la manière la plus appropriée pour offrir la moindre traînée aérodynamique pendant les phases de vol durant lesquelles l'hélicoptère n'est pas menacé, et ne nécessite pas de protection contre les rayonnements infrarouges. Par rapport à l'état de la technique selon le document FR-A-2 508 412 qui décrit déjà un ensemble dilueur-déviateur de jet, destiné à un turbomoteur d'aérodyne à échappement latéral et placé dans un capotage qui constitue une partie intégrante du fuselage de l'aérodyne, du type comprenant :

une tuyère d'injection comportant elle-même

un tronçon amont formant une tuyère collectrice des gaz chauds d'échappement du turbomoteur, et dont la section évolue progressivement d'une entrée circulaire sensiblement centrée sur l'axe de la turbine du turbomoteur, à une sortie sensiblement rectangulaire dont la dimension principale est verticale, et

un tronçon aval, prolongeant le tronçon amont, et formant au moins deux buses d'injection de section sensiblement rectangulaire dont la dimension principale est verticale, et

un corps de dilution et de déviation de jet, dans lequel débouche la sortie des buses d'injection et est aspiré, par effet trompe de l'air ambiant frais qui dilue les gaz chauds et en diminue la température, la sortie du corps étant délimitée par l'extrémité aval d'un tronçon coudé qui masque la tuyère vue de l'arrière et qui dévie le jet de mélange gazeux circulant dans le corps, l'invention se caractérise en ce que :

la tuyère d'injection présente un double coude latéral en S, la tuyère collectrice étant logée sous le capotage du turbomoteur et coudée de sorte que sa sortie s'ouvre dans ce capotage, et les buses d'injection étant à l'extérieur du capotage du turbomoteur et coudées de sorte que le flux de gaz chauds à leur sortie soit sensiblement parallèle à l'axe de la turbine du turbomoteur mais décalé latéralement par rapport à cet axe,

le corps de dilution et de déviation comprend, de l'amont vers l'aval,

un mélangeur de section sensiblement rectangulaire dont la dimension principale est verticale, dans l'entrée duquel débouche la sortie des buses d'injection, et qui est disposé latéralement dans le prolongement des buses d'injection, ce mélangeur étant alimenté en air ambiant aspiré par une entrée principale d'air frais située sensiblement au droit du raccord entre la tuyère collectrice et les buses d'injection, et délimitée extérieurement par un tronçon avant caréné d'un capotage masquant latéralement les buses d'injection et le mélangeur, et intérieurement par un écran interne caréné masquant latéralement et de l'avant la tuyère d'injection, et

le tronçon coudé, dirigé vers le haut et de section sensiblement rectangulaire, dont la dimension principale est verticale, et dans l'entrée duquel s'ouvre la sortie du mélangeur.

Ainsi, l'ensemble dilueur-déviateur de jet présente une disposition relative de ces différents éléments qui d'une part assure la dilution des gaz d'échappement et, d'autre part, masque au maximum les parties chaudes.

Avantageusement, le mélangeur comprend au moins une plaque déflectrice interne et longitudinale, sensiblement verticale et subdivisant le flux de mélange gazeux traversant le mélangeur, ce qui permet d'augmenter sensiblement le taux de dilution.

Afin d'assurer une meilleure atténuation du rayonnement infrarouge émis, la paroi extérieure du mélangeur est avantageusement calorifugée, et le capotage caréné est de préférence creux et constitué et/ou rempli d'un matériau thermiquement isolant.

De plus, une partie de l'air ambiant aspiré par l'entrée principale d'air frais passe entre le mélangeur et le capotage caréné qui le masque latéralement, de telle sorte que le transfert de chaleur entre les parois du mélangeur et du capotage de masquage latéral soit minimisé.

Dans le but d'affaiblir autant que possible les pertes de charges dues au coude du déviateur de jet, de façon à obtenir un taux de dilution suffisant, au moins un déflecteur transversal et coudé dans le même sens que le tronçon coudé est monté dans ce dernier.

Avantageusement, le tronçon coudé est monté pivotant par rapport au mélangeur, autour d'un axe de charnière transversal et sensiblement horizontal, entre deux positions extrêmes dont l'une est une position de déviation maximale, vers le haut, du jet de mélange gazeux traversant le mélangeur, position dans laquelle la tuyère est masquée vue de l'arrière, et dont l'autre est une position de déviation minimale, dans laquelle le jet de mélange gazeux est dirigé sensiblement vers l'arrière. Dans le cas où l'aérodyne est un hélicoptère, la possibilité ainsi offerte de diminuer l'angle de déflection du jet, lorsque l'hélicoptère n'est pas menacé, procure les avantages suivants : en vol stationnaire, la poussée dirigée vers le bas, due à la déflection du jet, et qui est néfaste pour les performances de l'hélicoptère, se trouve réduite, en position de déviation minimale, tandis qu'en vol de translation, la poussée vers l'avant se trouve augmentée et diminue sensiblement ou annule même la traînée de captation de l'air frais, dans cette même position de déviation minimale. Il faut également noter qu'en position de déviation maximale, il existe une interaction aérodynamique défavorable entre le jet de mélange gazeux, le sillage de l'ensemble dilueur-déviateur de jet et l'écoulement sur l'arrière de la partie du fuselage sur laquelle est monté cet ensemble, ce qui amplifie la traînée de l'ensemble et conduit à une traînée globale supérieure à la somme des traînées élémentaires, tandis qu'au contraire, en position de déviation minimale, l'écoulement sur la partie arrière du fuselage qui porte cet ensemble est soufflé par le jet de mélange gazeux en sortie de l'ensemble dilueur-déviateur de jet, ce qui entraîne une réduction de la traînée globale.

De préférence, l'écran interne caréné se raccorde à un bouchon central, appliqué contre le capotage du turbomoteur en amont du raccord de la tuyère collectrice aux buses d'injection et délimitant avec le tronçon avant caréné du capotage masquant le mélangeur, une entrée principale d'air semi-dynamique. Les avantages liés à une telle entrée d'air semi-dynamique à bouchon central sont, d'une part, une réduction de la traînée grâce à la limitation de la récupération de pression dynamique qui, diminuant le taux de dilution, réduit l'effet d'aéro-frein à la sortie du dilueur, et, d'autre part, un masquage de la tuyère d'injection et du mélangeur, pour interdire toute vue directe sur ces deux éléments, quel que soit l'angle, grâce à la combinaison géométrique de l'écran interne caréné, du bouchon central et du carénage de masquage latéral.

Avantageusement, la tuyère collectrice est solidaire du turbomoteur, tandis que les buses d'injection, le capotage caréné, l'écran caréné et, le cas échéant, le bouchon central, sont solidaires du corps de dilution et de déviation de jet, qui est indépendant de la structure de l'aérodyne et monté amovible sur le fuselage de ce dernier, de sorte qu'un ensemble dilueur-déviateur de jet selon l'invention puisse ainsi équiper des aérodynes non prévus à l'origine pour recevoir cet équipement de nature militaire.

Dans un mode de réalisation simple et pratique, le corps de dilution et de déviation est articulé par sa partie supérieure sur deux charnières d'axe sensiblement horizontales et fixées à un capot du fuselage de l'aérodyne, le corps de dilution et de déviation étant verrouillable en position d'utilisation par sa partie inférieure, sur la structure du fuselage, à l'aide d'axes amovibles, et le corps de dilution et de déviation est relevable en position d'accès au capot de fuselage sur lequel il est monté et est destiné à être maintenu en position relevée par au moins une béquille hydraulique.

Dans ce dernier cas, il est avantageux que le raccord entre la tuyère collectrice et les buses d'injection, en position d'utilisation du corps de dilution et de déviation, soit assuré par une couronne flottante présentant une partie de section en U engagée sur une bride périphérique de l'entrée des buses d'injection, dont la couronne flottante est solidaire, l'aile de cette partie en U du côté opposé aux buses se prolongeant par un voile sensiblement perpendiculaire à la bride périphérique et recourbé le long de son bord libre vers la base du U, la couronne flottante se centrant automatiquememt sur la tuyère collectrice, en assurant l'étanchéité du raccord, par appui du voile de la couronne flottante sur un bourrelet périphérique de la sortie de la tuyère collectrice. Une telle couronne flottante assure ainsi une liaison sans effort mécanique entre les deux tronçons de la tuyère d'injection, et elle autorise les débattements dans toutes les directions compatibles avec les vibrations et les déplacements normaux du turbomoteur en fonctionnement.

La présente invention sera mieux comprise à l'aide d'un exemple particulier de réalisation, qui sera décrit ci-dessous, à titre non limitatif, en référence aux dessins annexés sur lesquels :

la figure 1 représente schématiquement, en partie en coupe axiale et en partie en élévation latérale, un ensemble dilueur-déviateur de jet pour hélicoptère à turbomoteurs,

la figure 2 représente schématiquement l'ensemble de la figure 1 en coupe horizontale par un plan axial,

la figure 3 représente schématiquement l'ensemble des figures 1 et 2 en coupes transversale et verticale, selon III-III de la figure 1, et

la figure 4 est une vue schématique en coupe du raccord entre deux éléments de l'ensemble des figures 1 à 3.

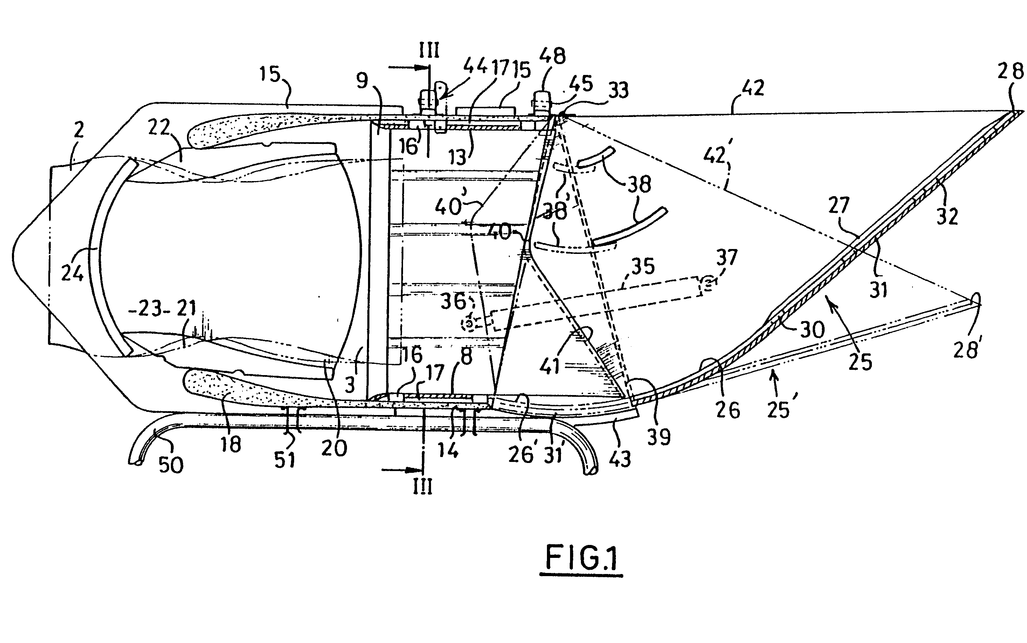

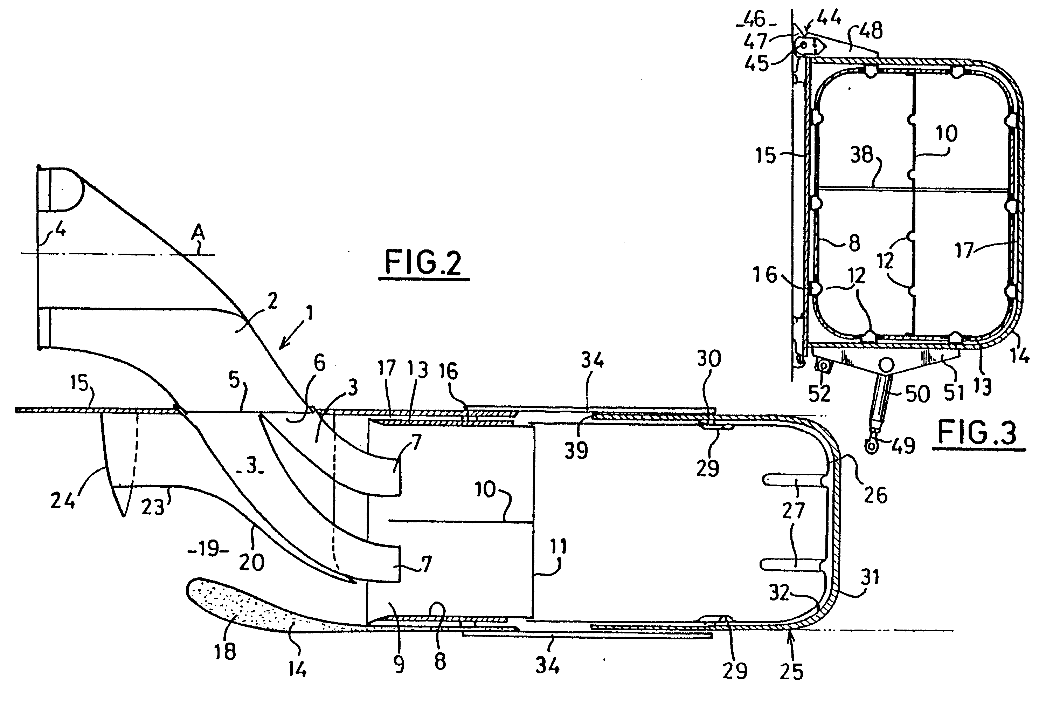

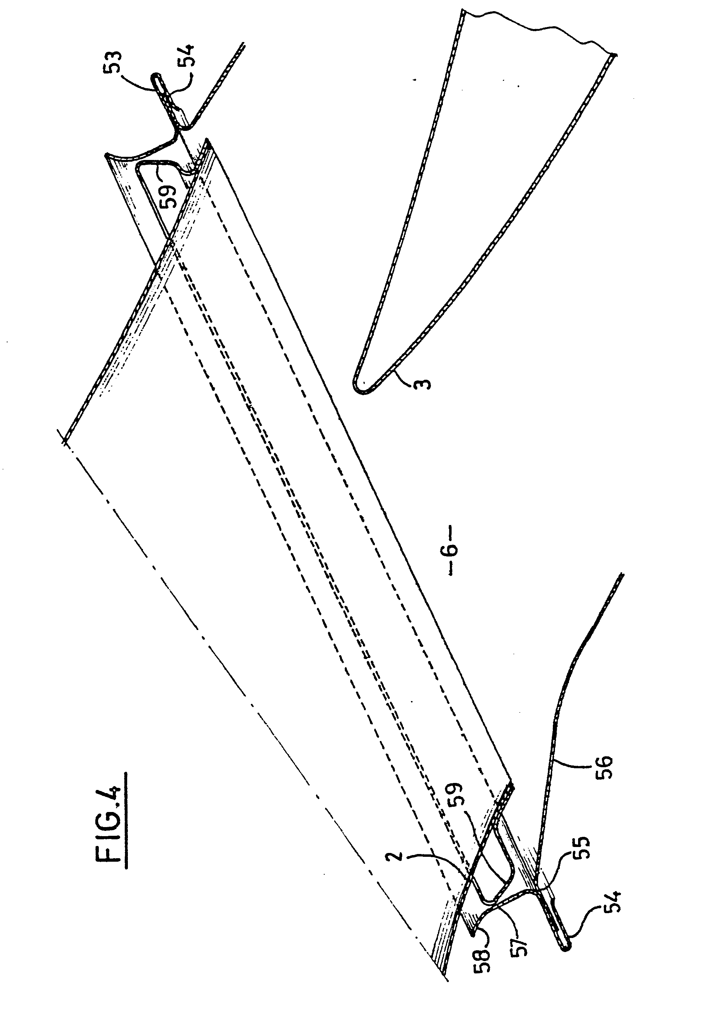

En référence aux figures 1 à 4, l'ensemble dilueur-déviateur de jet comprend une tuyère d'injection 1 présentant un double coude latéral, sensiblement en forme de S, et constituée par la combinaison d'une tuyère collectrice 2 et d'un injecteur subdivisé en deux buses d'injection 3. La tuyère collectrice 2 est montée à l'arrière de la turbine d'un turbomoteur (non représenté) à échappement latéral protégé sous un capot moteur du fuselage de l'hélicoptère, en avant de la boîte de transmission principale de ce dernier. La tuyère collectrice 2 est ainsi montée à la place de la tuyère de base du turbomoteur, à l'intérieur du capot moteur. Cette tuyère 2, qui reçoit les gaz chauds sortant de la turbine, présente une entrée 4 de section sensiblement circulaire centrée sur l'axe A de la turbine, et une évolution progressive de section qui devient sensiblement rectangulaire à la sortie 5, laquelle s'ouvre latéralement à l'extérieur du fuselage et débouche à l'intérieur de l'entrée 6 des buses d'injection 3. Vue en plan, la tuyère 2 a la forme d'un coude latéral à 60° environ par rapport à l'axe A de la turbine. Le raccord entre la sortie 5 de la tuyère 2 et l'entrée 6 des buses 3 est formée par une couronne flottante décrite ci-dessous en référence à la figure 4. Les deux buses 3 ont une entrée 6 rectangulaire commune, à partir de laquelle elles sont séparées et décalées latéralement l'une par rapport à l'autre. Toutes deux ont une section sensiblement rectangulaire dont la plus grande dimension est verticale et sont coudées sensiblement à 60° vers l'arrière de l'hélicoptère. Les sorties 7 des deux buses 3 débouchent dans un même plan vertical et transversal par rapport à l'axe longitudinal de l'hélicoptère, de sorte que les deux flux de gaz d'échappement aux sorties 7, qui résultent de la division du flux collecté dans la turbine 2, sont dirigés vers l'arrière de l'hélicoptère, sensiblement parallèlement à l'axe A de la turbine du turbomoteur, mais décalés latéralement par rapport à cet axe. En raison de la forme de la section des buses 3, les deux jets qui sortent de ces dernières ont une forme très allongée dans le sens vertical. Les sorties 7 des buses 3 s'ouvrent dans l'entrée 9 d'un mélangeur 8 de section rectangulaire à coins arrondis, dont la plus grande dimension est également verticale, et dont le passage central est subdivisé en deux veines égales et parallèles, disposées latéralement côte à côte, par une plaque interne médiane verticale et longitudinale 10, qui s'étend de l'entrée 9 du mélangeur 8 jusqu'à proximité de sa sortie 11. L'entrée 9 est conformée en convergent, afin de mieux canaliser vers l'intérieur du mélangeur 8, l'écoulement de l'air ambiant frais aspiré au travers du passage annulaire délimité entre la paroi interne de l'entrée 9 et la paroi externe des buses 3, par effet de trompe ou d'éjecteur, en utilisant une partie de l'énergie cinétique résiduelle des gaz d'échappement de la turbine. Cet air frais provient de l'extérieur par une entrée principale d'alimentation, décrite ci-dessous, ainsi que du volume délimité sous les capots du turbomoteur. La division du flux de sortie de la tuyère 2 en deux jets et l'allongement vertical de ces jets dans les buses 3 ont pour effet d'augmenter le périmètre de contact entre le flux de gaz d'échappement et l'air aspiré, pour une section de surface donnée. Dans le mélangeur 8, la température des gaz d'échappement chauds, essentiellement du gaz carbonique et de la vapeur d'eau, est abaissée, et la concentration de ces gaz est diminuée par dilution avec l'air frais aspiré, et la plaque médiane 10 augmente sensiblement le taux de dilution. Les parois du mélangeur 8, qui, comme la plaque médiane 10, sont rigidifiées par des nervures longitudinales telles que 12, réalisées par déformation, sont entourées d'un revêtement calorifuge externe 13 limitant l'émission infrarouge. Le mélangeur 8, disposé latéralement par rapport au fuselage de l'hélicoptère, est également masqué latéralement, vers le haut et vers le bas par un carénage 14 creux, réalisé en un matériau peu conducteur de la chaleur ou en tôle métallique et rempli d'un matériau peu conducteur de la chaleur. Ce carénage 14 constitue avec un capot interne 15, en forme de plaque verticale de même nature et par lequel il est supporté, l'ossature d'un corps de dilueur auquel le mélangeur 8 est solidarisé par des supports tels que 16, en forme de U à ailes rabattues à l'extérieur du U à leurs extrémités libres, de sorte qu'il subsiste un espacement libre 17 entre la paroi interne du carénage 14 et le revêtement calorifuge 13. Une partie du débit d'air frais aspiré circule dans cet espacement 17, de sorte que le transfert de chaleur entre le mélangeur 8 et le carénage 14 soit minimisé. Le carénage 14 se prolonge vers l'avant par un tronçon 18 profilé intérieurement comme extérieurement, et qui délimite extérieurement une entrée d'air principale 19, alimentant le mélangeur 8 et située sensiblement au droit du raccord entre la tuyère 2 et les buses 3. Cette entrée d'air principale 19 est orientée frontale-ment afin de récupérer la pression dynamique lorsque l'hélicoptère se déplace en translation à grande vitesse, et elle est délimitée intérieurement par un écran caréné 20 qui est fixé par des parties inférieure 21 et supérieure 22 contre la partie avant du capot 15, tandis que sa partie principale et centrale enveloppe extérieurement les deux buses 3, en masquant latéralement et vers l'avant ces dernières ainsi que la tuyère 2. Il faut noter que les buses 3 sont également masquées latéralement par le tronçon avant 18 du carénage 14. La paroi interne de ce tronçon avant 18 est conformée en divergent, mais coopère avec l'écran 20 bombé de telle sorte que l'entrée principale 19 soit légèrement convergente, ces formes concourant à limiter les pertes de charge subies par le courant d'air aspiré en vol stationnaire de l'hélicoptère. La partie centrale de l'écran 20 se prolonge vers l'avant, au-delà du raccord de la tuyère 2 aux buses 3, par un bouchon central 2l, dont l'extrémité avant 24 est arrondie et déborde latéralement en saillie vers l'extérieur. Grâce à ce bouchon central 23, qui masque vers l'avant la tuyère 2 et les buses 3, et qui favorise de plus une aspiration d'air à l'intérieur du capot moteur, on obtient une entrée d'air principale 9 de type semi-dynamique. Une telle entrée 19 offre les avantages de réduire la traînée par la limitation de la récupération de pression dynamique qui, en diminuant le taux de dilution, réduit l'effet d'aéro-frein à la sortie de l'ensemble de dilution, et de masquer la tuyère 2, les buses 3 et le mélangeur 8 de manière à empêcher toute vue directe sur ces éléments, de l'avant ou latéralement, quel que soit l'angle d'observation, grâce à la combinaison géométrique assurée par l'écran caréné 20, le bouchon central 23 et le carénage 14. L'écran 20 et le bouchon central 23 ainsi que le tronçon avant 18 du carénage 14 sont refroidis par l'air frais circulant le long de leurs parois. La sortie du mélangeur 8 s'ouvre dans l'entrée d'un déviateur de jet en forme de coude 25, de section transversale rectangulaire et dirigée vers le haut. Ce déviateur de jet 5 comprend une paroi interne 26, dont la partie inférieure et arrière est rigidifiée par des nervures longitudinales 27 réalisées par déformation dans le tronçon plat qui se termine au niveau du bord arrière libre 28, et dont les parties latérales verticales sont rigidifiées par des nervures inclinées 29, également réalisées par déformation. Par des supports 30 en forme de U à ailes rabattues vers l'extérieur, la paroi interne 26 est fixée avec un certain espacement libre 32, à l'intérieur d'une coque externe 31 sous la forme correspondante. Par l'extrémité avant et supérieure de ces parties latérales verticales, le coude 25 est monté pivotant autour d'un axe de charnière 33, transversal et sensiblement horizontal, sur deux éléments latéraux d'ossature 34 solidaires l'un de la partie arrière du capot 15 et l'autre de la partie arrière du carénage 14. Les pivotements du coude 25 par rapport au mélangeur 8 sont commandés par un vérin de manœuvre, schématisé en traits interrompus 35 sur la figure 1, et dont l'extrémité avant est articulée en 36 sur un côté du mélangeur 8, tandis que son extrémité arrière est articulée du même côté, en 37, sur le coude 25. Deux plaques déflectrices 38 (dont une seule est représentée sur la figure 3), transversales et coudées dans le même sens et autour du même centre de courbure que le coude 25, sont montées entre les parties latérales de la paroi interne 26, afin de minimiser les pertes de charge dues au coude de manière à présenter un taux de dilution suffisant. Le bord avant de ces plaques 38 est voisin des bords avant rectilignes 39 des parties latérales de la coque externe 31, tandis que les bords avant des parties latérales de la paroi interne 26 ont la forme d'une saillie en V 40, qui s'avance vers le mélangeur 8, dont les parties latérales présentent à l'arrière une découpe en V 41 de forme correspondante. Les manœuvres du vérin 35 permettent ainsi de faire pivoter le coude 25 entre deux positions extrêmes, dont l'une, représentée en traits pleins sur la figure 1, est la position de déviation maximale vers le haut du jet sortant du coude 25. Dans cette position, le bord arrière et supérieur 26 et les bords supérieurs et latéraux 42, qui sont sensiblememt horizontaux, sont disposés de telle sorte que par la sortie du déviateur de jet, un observateur situé en un point quelconque à l'arrière et à la même altitude que l'hélicoptère dans son assiette normale de vol stationnaire, ne peut voir les parois internes du mélangeur 8. De plus, les buses 3 et la tuyère 2 sont également masquées vers l'arrière. Dans cette position de déflection maximale vers le haut, les saillies en V 40 vers l'avant du coude 25 ferment latéralement les découpes en V 41 des côtés du mélangeur 8. Cette position haute, qui assure la meilleure protection contre une détection du rayonnement infrarouge, car les parties chaudes sont masquées au maximum et le jet de gaz chaud est bien dilué, est celle qui est adoptée en cas de menace. Dans cette configuration, il se développe une interaction défavorable entre le jet sortant de l'ensemble dilueur-détecteur de jet, le sillage de cet ensemble et l'écoulement sur l'arrière de la partie de fuselage sur laquelle l'ensemble est monté. Cette interaction amplifie la traînée de l'ensemble et conduit à une traînée globale supérieure à la traînée élémentaire. Au cours des phases de vol pendant lesquelles l'hélicoptère n'est pas menacé, le vérin 35 permet de ramener le coude 25 en position basse ou de déviation minimale du jet, position qui est représentée par des traits interrompus sur la figure 1, les différents éléments du coude 25 adoptant alors une position repérée par leur même référence respective que précédemment mais affectée d'un symbole '. Le passage de la position haute à la position basse est obtenu par pivotement d'ensemble du coude 25 autour de l'axe 33, vers l'avant, c'est-à-dire vers le mélangeur 8, les saillies latérales en V 40 enveloppant partiellement par l'extérieur les côtés du mélangeur 8, et les parties inférieures de la paroi interne 26 et de la coque externe 31 s'engageant dans un berceau coudé 43, de courbure correspondante et solidaire de l'ossature de l'ensemble dilueur-déviateur de jet. Dans cette position basse, dans laquelle le jet sortant du coude 25 reste sensiblement dirigé vers le haut mais est bien davantage dirigé vers l'arrière que dans la position haute, la sortie du jet de mélange gazeux assure un soufflage de l'écoulement sur la partie arrière du fuselage sur laquelle est monté le dilueur-déviateur de jet, de sorte que la traînée globale est réduite. D'autres avantages liés à l'adoption de cette configuration basse sont, en vol de translation rapide de l'hélicoptère, que la poussée vers l'avant est augmentée et qu'elle diminue sensiblement, voire même annule, la traînée due à la captation d'air frais et, en vol stationnaire, que la poussée vers le bas due à la déflection du jet, et qui est désavantageuse pour les performances de l'hélicoptère, se trouve réduite.

Dans cette réalisation, les buses 3, l'écran 20 et le bouchon central 23, le carénage 14 et le coude de sortie pivotant 25 sont solidaires de l'ossature de l'ensemble dilueur-déviateur de jet, et constitue un corps de structure indépendante de celle du fuselage, mais articulé, à sa partie supérieure et interne, par deux charnières 44 d'axe 45 horizontal et longitudinal, sur une partie de fuselage qui est, par exemple, un capot 46 coulissant vers l'arrière. Sur ce capot 46, sont fixées les parties immobiles et centrales 47 des charnières 44, tandis que les parties pivotantes et enveloppantes 48 des charnières 44 sont fixées à la paroi supérieure du carénage 14. En position d'utilisation de cet ensemble dilueur-déviateur de jet, monté amovible sur l'hélicoptère, le corps articulé est verrouillé par sa partie inférieure sur la structure du fuselage, au moyen d'axes amovibles (non représentés) engagés dans les embouts à œil 49 vissés dans les deux extrémités recourbées vers le bas d'un arceau longitudinal 50, monté dans des attaches doubles transversales et triangulaires 51 fixées sous le carénage 14.

L'ouverture du capot coulissant 46, qui est par exemple un capot passerelle arrière du turbomoteur, est obtenue par la séquence suivante : on déverrouille les embouts 49 de la structure du fuselage en retirant les axes amovibles, puis on relève l'ensemble dilueur-déviateur de jet par pivotement vers le haut autour des axes 45 des charnières 44, et on le maintient en position relevée à l'aide de béquilles hydrauliques, dont une attache d'extrémité supérieure est fixée à une attache transversale 51 et est schématisée en 52 sur la figure 3. Une poignée d'ouverture (non représentée) du capot coulissant 46 est alors accessible, et le capot est déplacé vers l'arrière. La séquence inverse permet de revenir en position d'utilisation de l'ensemble dilueur-déviateur de jet. Lorsque ce dernier est rabattu, le raccord entre la tuyère 2 et les buses 3 est assuré de manière relativement étanche aux gaz par un centrage automatique, autour de la sortie 5 de la tuyère 2 restant en permanence attachée au turbomoteur, d'une couronne flottante 53 schématisée en coupe sur la figure 4.

Cette couronne flottante 53 comprend une partie en U 54, dans laquelle est engagée une bride périphérique 55 portée par l'extrémité amont évasée 56 délimitant l'entrée 6 des buses 3. Une aile de la partie en U 54 est plus longue que l'autre et est prolongée latéralement vers l'extérieur du U 54, sensiblement perpendiculairement à la bride 55, par un voile 56, dont le bord libre 57 est légèrement rabattu vers la base du U 54. Lorsque les buses 3 sont rabattues vers la tuyère 2, par pivotement de l'ensemble dilueur-déviateur de jet vers sa position d'utilisation, la couronne flottante 53, qui est liée à l'extrémité amont 56 des buses 3, vient automatiquement se positionner par son voile 56 contre un bourrelet périphérique 58 de tôle repliée en U refermé autour de la paroi d'extrémité aval de la tuyère 2. La couronne flottante 53 assure ainsi une liaison sans effort mécanique entre la tuyère 2 et les buses 3, et elle autorise tous les débattements dans toutes les directions compatibles avec les vibrations et déplacements normaux du turbomoteur.

Dans cette réalisation, toutes les pièces, à l'exception des matériaux calorifuges, sont métalliques et rigides, et résistent aux températures élevées des gaz d'échappement, et les parois chaudes léchées par ces gaz sont toutes bien masquées, lorsque le coude 25 est en position haute.

Il faut noter que le vérin de manœuvre 35 peut, si on le souhaite, être supprimé et le coude 25 bloqué en position haute, si l'on désire assurer une protection maximale permanente de l'hélicoptère.

**Revendications**

1. Ensemble dilueur-déviateur de jet pour turbomoteur d'aérodyne à échappement latéral et placé dans un capotage qui constitue une partie intégrante du fuselage de l'aérodyne, l'ensemble comprenant :

une tuyère d'injection (1) comportant :

un tronçon amont formant une tuyère collectrice (2) des gaz chauds d'échappement du turbomoteur, et dont la section évolue progressivement d'une entrée (4) circulaire sensiblement centrée sur l'axe (A) de la turbine du turbomoteur à une sortie (5) sensiblement rectangulaire dont la dimension principale est verticale, et

un tronçon aval, prolongeant le tronçon amont, et formant au moins deux buses d'injection (3) de section sensiblement rectangulaire, et

un corps de dilution et de déviation de jet (8, 25), dans lequel débouche la sortie (7) des buses d'injection (3) et est aspiré, par effet trompe, de l'air ambiant frais qui dilue les gaz chauds et en diminue la température, la sortie du corps (8, 25) étant délimitée par l'extrémité aval (28) d'un tronçon coudé (25) qui masque la tuyère (1) vue de l'arrière et qui dévie le jet de mélange gazeux circulant dans le corps (8, 25), caractérisé en ce que :

la tuyère d'injection (1) présente un double coude latéral en S, la tuyère collectrice (2) étant logée sous le capotage du turbomoteur et coudée de sorte que sa sortie (5) s'ouvre vers l'extérieur, et les buses d'injection (3) étant à l'extérieur du capotage du turbomoteur et coudées de sorte que le flux de gaz chauds à leur sortie (7) soit sensiblement parallèle à l'axe (A) de la turbine du turbomoteur mais décalé latéralement par rapport à cet axe (A),

le corps de dilution et de déviation comprend, de l'amont vers l'aval,

un mélangeur (8) de section sensiblement rectangulaire dont la dimension principale est verticale, dans l'entrée (9) duquel débouche la sortie (7) des buses d'injection (3), et qui est disposé latéralement dans le prolongement des buses d'injection (3), ce mélangeur (8) étant alimenté en air ambiant aspiré par une entrée principale d'air frais (19) située sensiblement au droit du raccord entre la tuyère collectrice (2) et les buses d'injection (3), et délimitée extérieurement par un tronçon avant (18) caréné d'un capotage (14) masquant latéralement les buses d'injection (3) et le mélangeur (8), et intérieurement par un écran interne caréné (20) masquant latéralement et de l'avant la tuyère d'injection (1), et

le tronçon coudé (25), dirigé vers le haut et de section sensiblement rectangulaire dont la dimension principale est verticale, et dans l'entrée (40) duquel s'ouvre la sortie (11) du mélangeur (8).

2. Ensemble dilueur-déviateur de jet selon la revendication 1, caractérisé en ce que le mélangeur (8) comprend au moins une plaque déflectrice (10), interne et longitudinale, sensiblement verticale, et subdivisant le flux de mélange gazeux traversant le mélangeur (8).

3. Ensemble dilueur-déviateur de jet selon l'une des revendications 1 et 2, caractérisé en ce que la paroi extérieure du mélangeur (8) est calorifugée (13).

4. Ensemble dilueur-déviateur de jet selon l'une des revendications 1 à 3, caractérisé en ce qu'une partie de l'air ambiant aspiré passe entre le mélangeur (8) et le capotage caréné (14) qui le masque latéralement.

5. Ensemble dilueur-déviateur de jet selon l'une des revendications 1 à 4, caractérisé en ce que le capotage caréné (14) est creux et constitué et/ou rempli d'un matériau thermiquement isolant.

6. Ensemble dilueur-déviateur de jet selon l'une des revendications 1 à 5, caractérisé en ce qu'au moins un déflecteur transversal (38) et coudé dans le même sens que le tronçon coudé (25), est monté dans ce dernier.

7. Ensemble dilueur-déviateur de jet selon l'une des revendications 1 à 6, caractérisé en ce que le tronçon coudé (25) est monté pivotant, par rapport au mélangeur (8), autour d'un axe de charnière (33) transversal et sensiblememt horizontal, entre deux positions extrêmes, dont l'une est une position de déviation maximale vers le haut du jet de mélange gazeux traversant le mélangeur (8), dans laquelle la tuyère (1) est masquée vers l'arrière, et dont l'autre est une position de déviation minimale, dans laquelle le jet de mélange gazeux est dirigé sensiblement vers l'arrière.

8. Ensemble dilueur-déviateur de jet selon l'une des revendications 1 à 7, caractérisé en ce que l'écran interne caréné (20) se raccorde à un bouchon central (23), appliqué contre un capot interne (15) en amont du raccord de la tuyère collectrice (2) aux buses d'injection (3), et délimitant avec le tronçon avant caréné (18) du capotage (14) masquant le mélangeur (8) une entrée principale d'air (19) semi-dynamique.

9. Ensemble dilueur-déviateur de jet selon l'une des revendications 1 à 8, caractérisé en ce que la tuyère collectrice (2) est solidaire du turbomoteur, tandis que les buses d'injection (3), le capotage caréné (14), l'écran caréné (20) et le cas échéant, le bouchon central (23) sont solidaires du corps de dilution et de déviation de jet (8, 25) qui est indépendant de la structure de l'aérodyne et monté amovible sur le fuselage de ce dernier.

10. Ensemble dilueur-déviateur de jet selon la revendication 9, caractérisé en ce que le corps de dilution et de déviation (8, 25) est articulé par sa partie supérieure sur deux charnières (44) d'axe (45) sensiblement horizontal et longitudinal, et fixées à un capot (46) du fuselage de l'aérodyne, le corps de dilution et de déviation (8, 25) étant verrouillé en position d'utilisation par sa partie inférieure sur la structure du fuselage à l'aide d'axes amovibles.

11. Ensemble dilueur-déviateur de jet selon la revendication 10, caractérisé en ce que le corps de dilution et de déviation (8, 25) est relevable en position d'accès au capot de fuselage (46) sur lequel il est monté, et est destiné à être maintenu en position relevée par au moins une béquille hydraulique (52).

12. Ensemble dilueur-déviateur de jet selon l'une des revendications 10 et 11, caractérisé en ce que le raccord entre la tuyère collectrice (2) et les buses d'injection (3), en position d'utilisation du corps de dilution et de déviation (8, 25), est assuré par une couronne flottante (53) présentant une partie de section en U (54) engagée sur une bride périphérique (55) de l'entrée (6) des buses d'injection (3), dont la couronne flottante (53) est solidaire, l'aile de cette partie en U (54) du côté opposé aux buses (3) se prolongeant par un voile (56) sensiblement perpendiculaire à la bride périphérique (55) et recourbé le long de son bord libre (57), vers la base du U (54), la couronne flottante (53) se centrant automatiquement sur la tuyère collectrice (2) en assurant l'étanchéité par appui du voile (56) de la couronne flottante (53) sur un bourrelet (58) périphérique de la sortie (5) de la tuyère collectrice (2).

### Claims

1. A jet diluter/deviator unit for an aerodyne turboshaft engine with lateral exhaust and placed in a cowling constituting an integral part of the fuselage of the aerodyne, said unit comprising :

an injection nozzle (1) comprising :

an upstream section forming a collecting pipe (2) for the hot turboshaft engine exhaust gases, and whose cross section develops progressively from a circular inlet (4) substantially centred on the axis (A) of the turbine of the turboshaft engine to a substantially rectangular outlet (5) whose main dimension is vertical, and

a downstream section, extending the upstream section and forming at least two injection nozzles (3) with substantially rectangular cross sections, and

a jet dilution and deviation body (8, 25), into which open the outlets (7) of the injection nozzles (3) and is sucked, by a jet pump effect, fresh ambient air which dilutes the hot gases and diminishes their temperature, the outlet from the body (8, 25) being delimited by the downstream end (28) of a curved section (25) which masks the nozzle (1) when seen from behind and which deviates the jet of gaseous mixture circulating in the body (8, 25), characterized in that :

the injection nozzle (1) comprises a double lateral curve, in the shape of an S, the collecting pipe (2) being located under the cowling of the turboshaft engine and curved such that its outlet (5) opens to the outside, and the injection nozzles (3) being outside the cowling of the turboshaft engine and curved such that the flow of hot gases at their outlets (7) is substantially parallel to the axis (A) of the turbine of the turboshaft engine but staggered laterally in relation to this axis (A),

the dilution and deviation body comprises, in the downstream direction,

a mixer (8) with a substantially rectangular cross section whose main dimension is vertical, into the inlet (9) of which open the outlets (7) of the injection nozzles (3), and which is arranged laterally in the extension of the injection nozzles (3), this mixer (8) being supplied with ambient air sucked in through a main fresh air inlet (19) situated substantially at right angles with the connection between the collecting pipe (2) and the injection nozzles (3), and externally defined by a front streamlined section (18) of a cowling (14) masking laterally the injection nozzles (3) and the mixer (8), and internally by an internal streamlined screen (20) masking laterally and from the front the injection nozzle (1), and

the curved section (25), directed towards the top and having a substantially rectangular cross section whose main dimension is vertical, and into the inlet (40) of which opens the outlet (11) of the mixer (8).

2. A jet diluter/deviator unit according to claim 1, characterized in that the mixer (8) comprises at least one internal, longitudinal and substantially vertical deflectin, plate (10) which subdivides the flow of the gaseous mixture passing through the mixer (8).

3. A jet diluter/deviator unit according to claim 1 or claim 2, characterized in that the external wall of the mixer (8) is thermally insulated (13).

4. A jet diluter/deviator unit according to any one of claims 1 to 3, characterized in that part of the ambient air which is sucked in passes between the mixer (8) and the streamlined cowling (14) which masks it laterally.

5. A jet diluter/deviator unit according to any one of claims 1 to 4, characterized in that the streamlined cowling (14) is hollow and consists of and/or is filled with a thermally insulating material.

6. A jet diluter/deviator unit according to any one of claims 1 to 5, characterized in that at least one transverse deflector (38), curved in the same direction as the curved section (25), is mounted in the latter.

7. A jet diluter/deviator unit according to any one of claims 1 to 6, characterized in that the curved section (25) is mounted pivotally, in relation to the mixer (8), around a transverse and substantially horizontal hinge pin (33) between two end positions, one of which is a position of maximum upwards deviation of the jet of gaseous mixture passing through the mixer (8), in which the nozzle is masked at the rear, and the other of which is a position of minimum deviation, in which the jet of gaseous mixture is directed substantially rearwards.

8. A jet diluter/deviator unit according to any one of claims 1 to 7, characterized in that the internal streamlined screen (20) is connected with a central plug (23) applied against an internal cowl (15) upstream of the connection between the collecting pipe (2) and the injection nozzles (3), and defining with the front streamlined section (18) of the cowling (14) masking the mixer (8) a main semi-dynamic air inlet (19).

9. A jet diluter/deviator according to any one of claims 1 to 8, characterized in that the collecting pipe (2) is firmly connected to the turboshaft engine, while the injection nozzles (3), the streamlined cowling (14), the streamlined screen (20) and, if present, the central plug (23) are firmly connected to the jet dilution and deviation body (8, 25), which is independent of the structure of the aerodyne and mounted removably on the fuselage thereof.

10. A jet diluter/deviator unit according to claim 9, characterized in that the dilution and deviation body (8, 25) is articulated by its upper part on two hinges (44) with a substantially horizontal and longitudinal pin (45) and fixed to an aerodyne fuselage cowl (46), the dilution and deviation body (8, 25) being locked in the utilization position by its lower part on the fuselage structure with the aid of removable pins.

11. A jet diluter/deviator unit according to claim 10, characterized in that the dilution and deviation body (8, 25) can be lifted into a position allowing access to the fuselage cowl (46) on which it is mounted, and is designed to be held in the raised position by at least one hydraulic strut (52).

12. A jet diluter/deviator unit according to claim 10 or claim 11, characterized in that the connection between the collecting pipe (2) and the injection nozzles (3), when the dilution and deviation body (8, 25) is in the utilization position, is ensured by a floating ring (53) having a part with a U-shaped section (54) engaged with a peripheral collar (55) of the inlet (6) of the injection nozzles (3), with which the floating ring (53) is firmly connected, the wing of this U-shaped part (54) on the opposite side from the nozzles (3) being extended by a web (56) substantially at right angles to the peripheral collar (55) and curved along its free edge (57), towards the base of the U (54), the floating ring (53) centring automatically on the collecting pipe (2) while ensuring tightness by the web (56) of the floating ring (53) resting on a peripheral rim (58) of the outlet (5) of the collecting pipe (2).

**Patentansprüche**

1. Strahlverdünnungs- und -umlenkvorrichtung für einen Turbomotor eines Drehflügelflugzeugs mit seitlichem Auslaß, angeordnet in einer Verkleidung, die einen integrierenden Teil des Rumpfes des Drehflügelflugzeugs bildet, wobei die Vorrichtung umfaßt

eine Einblasvorrichtung (1), die

einen stromaufwärts angeordneten Abschnitt, der für die heißen Abgase des Turbomotors eine Sammeldüse (2) bildet und dessen Querschnitt von einem kreisförmigen Eingang (4), der zur Achse (A) der Turbine des Turbomotors im wesentlichen zentriert ist, fortschreitend in einen im wesentlichen rechteckigen Ausgang (5), dessen Hauptdimension vertikal verläuft, übergeht, und

einen stromabwärts angeordneten Abschnitt, welcher den stromaufwärts gelegenen Abschnitt verlängert und mindestens zwei Blasdüsen (3) mit im wesentlichen rechteckigem Querschnitt, aufweist,

sowie einen Strahlverdünnungs- und -umlenkkörper (8, 25), in den der Ausgang (7) der Blasdüsen (3) einmündet und der mittels eines Pumpeffekts mit frischer Umgebungsluft belüftet wird, welche die heißen Gase verdünnt und so die Temperatur herabsetzt, wobei der Ausgang des Körpers (8, 25) durch den stromabwärts gelegenen äußersten Teil (28) eines gekrümmten Abschnitts (25) begrenzt ist, der die Einblasvorrichtung (1), von hinten gesehen, verdeckt und den Strahl der in dem Körper (8, 25) zirkulierenden Gasmischung ablenkt, dadurch gekennzeichnet, daß

die Einblasvorrichtung (1) eine seitliche S-förmige Doppelkrümmung aufweist, die Sammeldüse (2) unter der Verkleidung des Turbomotors gelagert und derart gekrümmt ist, daß sich ihr Ausgang (5) nach außen öffnet, sowie die Einblasdüsen (3) sich an der Außenseite der Verkleidung des Turbomotors befinden und an ihrem Ausgang (7) derart gekrümmt sind, daß der Strom der heißen Gase im wesentlichen parallel zur Achse (A) der Turbine des Turbomotors, aber bezüglich dieser Achse (A) seitlich verschoben, ausgerichtet ist,

sowie der Verdünnungs- und -umlenkkörper von der stromaufwärts zur stromabwärts gelegenen Seite

einen Mischer (8) mit einem im wesentlichen rechteckigem Querschnitt, dessen Hauptdimension vertikal verläuft, in dessen Eingang (9) der Ausgang (7) der Blasdüsen (3) einmündet und der seitlich in der Verlängerung der Blasdüsen (3) angeordnet ist, wobei dieser Mischer (8) mit Umgebungsluft versorgt wird, die über einen Haupteingang (19) für Frischluft angesaugt wird, der im wesentlichen rechts von der Verbindung zwischen der Sammeldüse (2) und den Blasdüsen (3) angeordnet ist und außen durch einen vorne strömungsgünstig gestalteten Abschnitt (18) einer Verkleidung (14), welche die Blasdüsen (3) und den Mischer (8) seitlich verdeckt, und innen durch eine innen strömungsgünstig gestaltete Abschirmung (20), welche die Einblasvorrichtung (1) seitlich und von vorne verdeckt, begrenzt ist, sowie

den gekrümmten Abschnitt (25), der nach oben gerichtet ist und einen im wesentlichen rechteckigen Querschnitt aufweist, dessen Hauptdimension vertikal verläuft, und in dessen Eingang (40) sich der Ausgang (11) des Mischers (8) öffnet, aufweist.

2. Strahlverdünnungs- und -umlenkvorrichtung nach Anspruch 1, dadurch gekennzeichnet, daß der Mischer (8) mindestens eine innere, in Längsrichtung und im wesentlichen senkrecht sich erstreckende Ablenkplatte (10) aufweist, welche den durch den Mischer (8) ziehenden Strom des Gasgemisches aufteilt.

3. Strahlverdünnungs- und -umlenkvorrichtung nach einem der Ansprüche 1 und 2, dadurch gekennzeichnet, daß die Außenwand des Mischers (8) wärmeisoliert (13) ist.

4. Strahlverdünnungs- und -umlenkvorrichtung nach einem der Ansprüche 1 bis 3, dadurch gekennzeichnet, daß ein Teil der angesaugten Umgebungsluft zwischen dem Mischer (8) und der strömungsgünstig gestalteten Verkleidung (14), die ihn seitlich verdeckt, hindurchströmt.

5. Strahlverdünnungs- und -umlenkvorrichtung nach einem der Ansprüche 1 bis 4, dadurch gekennzeichnet, daß die strömungsgünstig gestaltete Verkleidung (14) hohl ist sowie aus einem thermisch isolierenden Material besteht oder damit gefüllt ist.

6. Strahlverdünnungs- und -umlenkvorrichtung nach einem der Ansprüche 1 bis 5, dadurch gekennzeichnet, daß mindestens eine quer angeordnete Ablenkplatte (38), die im gleichen Sinn wie der gekrümmte Abschnitt (25) gekrümmt ist, an dem letzteren befestigt ist.

7. Strahlverdünnungs- und -umlenkvorrichtung nach einem der Ansprüche 1 bis 6, dadurch gekennzeichnet, daß der gekrümmte Abschnitt (25) um eine querverlaufende und im wesentlichen horizontal angeordnete Scharnierachse (33) zwischen zwei extremen Stellungen bezüglich des Mischers (8) schwenkbar befestigt ist, von denen die eine die Stellung der maximalen Umlenkung des den Mischer (8) durchquerenden Strahls des Gasgemisches nach oben ist, wobei in dieser Stellung die Vorrichtung (1) nach hinten verdeckt ist, und von denen die andere die Stellung der minimalen Umlenkung, in welcher der Strahl des Gasgemisches im wesentlichen nach hinten gerichtet wird, ist.

8. Strahlverdünnungs- und -umlenkvorrichtung nach einem der Ansprüche 1 bis 7, dadurch gekennzeichnet, daß die innere, strömungsgünstig gestaltete Abschirmung (20) sich an eine zentrale Abdeckung (23) anschließt und stromaufwärts von der Verbindung der Sammeldüse (2) zu den Blasdüsen (3) an einer inneren Abdeckhaube (15) angebracht ist sowie mit dem vorne strömungsgünstig gestalteten Abschnitt (18) der Verkleidung (14), die den Mischer (8) verdeckt, einen halbdynamischen Lufthaupteingang (19) begrenzt.

9. Strahlverdünnungs- und -umlenkvorrichtung nach einem der Ansprüche 1 bis 8, dadurch gekennzeichnet, daß die Sammeldüse (2) mit dem Turbomotor kraftschlüssig verbunden ist, während die Blasdüsen (3), die strömungsgünstig gestaltete Verkleidung (14), die strömungsgünstig gestaltete Abschirmung (20) und gegebenenfalls die zentrale Abdeckung (23) mit dem Strahlverdünnungs- und -umlenkkörper (8,25) kraftschlüssig verbunden sind, der vom Aufbau des Drehflügelflugzeugs unabhängig und lösbar an dessen Rumpf montiert ist.

10. Strahlverdünnungs- und -umlenkvorrichtung nach Anspruch 9, dadurch gekennzeichnet, daß der Verdünnungs- und -umlenkkörper (8, 25) mit seinem oberen Teil über zwei Scharniere (44) der Achse (45) im wesentlichen horizontal in Längsrichtung angelenkt ist, wobei die Scharniere (44) an einer Abdeckhaube (46) des Rumpfes des Drehflügelflugzeugs befestigt sind, und daß der Verdünnungs- und -umlenkkörper (8, 25) in der Betriebsstellung mit seinem unteren Teil am Aufbau des Rumpfes mit Hilfe lösbarer Achsen verriegelt ist.

11. Strahlverdünnungs- und -umlenkvorrichtung nach Anspruch 10, dadurch gekennzeichnet, daß der Verdünnungs- und -umlenkkörper (8, 25) in eine Stellung für den Zugang zu der Abdeckhaube (46) des Rumpfes, an dem er befestigt ist, anhebbar und dazu bestimmt ist, durch mindestens eine hydraulische Stütze (52) in der angehobenen Stellung gehalten zu werden.

12. Strahlverdünnungs- und -umlenkvorrichtung nach einem der Ansprüche 10 und 11, dadurch gekennzeichnet, daß in der Betriebsstellung des Verdünnungs- und -umlenkkörpers (8, 25) die Verbindung zwischen der Sammeldüse (2) und den Blasdüsen (3) durch einen schwimmenden Flansch (53) sichergestellt ist, der einen U-förmigen Teil (54) darstellt, welcher mit einem Umfangsflansch (55) des Eingangs (6) der Blasdüsen (3) im Eingriff steht, und der mit dem schwimmenden Flansch (53) formschlüssig verbunden ist, und daß der Schenkel dieses U-förmigen Teils (54) an der den Düsen (3) gegenüberliegenden Seite durch einen segelförmigen Abschnitt (56) verlängert ist, der im wesentlichen senkrecht zu dem Umfangsflansch (55) angeordnet und längs seiner freien Kante (57) gegen die Basis des U-förmigen Teils (54) gekrümmt ist, und der schwimmende Flansch (53) sich automatisch bezüglich der Sammeldüse (2) zentriert und die Abdichtung durch Stützen mittels des segelförmigen Abschnitts (56) des schwimmenden Flansches (53) an einem Umfangswulst (58) des Ausgangs (5) der Sammeldüse (2) sicherstellt.

FIG.1

FIG.2

FIG.3

0 165 167

FIG.4

53

54

59

0 165 167

3

2

59

58

57

—6—

3

54

55

56